# EUROPEAN PATENT SPECIFICATION

(11) **EP 2 132 061 B1**
(45) Date of publication and mention of the grant of the patent: **22.12.2010**
(21) Application number: 08717892.7
(22) Date of filing: 17.03.2008
(51) Int. Cl.: B60R 21/09

(54) **DEVICE TO DISCONNECT THE STEERING PEDAL FROM A VEHICULAR MECHANISM IN THE CASE OF AN ACCIDENT**
VORRICHTUNG ZUR TRENNUNG DES LENKPEDALS VON EINEM FAHRZEUGMECHANISMUS BEI EINEM UNFALL
DISPOSITIF PERMETTANT DE DÉCONNECTER LA PÉDALE DE PILOTAGE D'UN MÉCANISME DE VÉHICULE EN CAS D'ACCIDENT

(30) Priority: 30.03.2007 ES 200700841
(43) Date of publication of application: 16.12.2009
(73) Proprietor: Flexngate Automotive Iberica, S.A., 08520 Les Franqueses Del Valles (ES)
(72) Inventor: NICOLAS DOMINGO, Joaquin, E-08390 Montgat (ES); CANALS RIBA, Antoni, E-08009 Barcelona (ES); BOQUET CARRETERO, Marçal, E-08301 Mataro (ES); SELLS HIDALGO, Lluis, E-08520 Les Franqueses Del Valles (ES)
(74) Representative: Sugrañes Patentes y Marcas
(86) International application number: PCT/EP2008/053155
(87) International publication number: WO 2008/119653

(56) References cited:
- EP-A- 0 879 162
- EP-A- 0 904 990
- EP-A- 0 983 912
- EP-A- 1 134 128
- EP-A- 1 279 563
- DE-A1- 19 515 852
- GB-A- 2 377 912
- JP-A- 2002 087 229
- US-A- 5 921 144

## Description

### Technical field of the invention

This invention relates to a device to disconnect a steering pedal from a vehicular mechanism, such as a clutch mechanism, whereto it is connected, in the case of a head-on collision of the vehicle. The device is specifically applicable to pedals which, assembled with the capacity to turn around a main shaft, receive pressure from the foot and transfer its force to said mechanism. For this purpose, the device comprises an actuator rod articulately connected to the pedal and which transmits, in normal operating conditions of the vehicle, the turning movement of the pedal to the mechanism.

### Background of the invention

Currently, several devices are known whose aim is to disconnect the steering pedal of a vehicle from said mechanism, applicable to pedals connected to said mechanisms by means of actuator rods, which are articulately connected to the pedal by one of its ends. Disconnecting the pedals from the mechanisms whereto they are linked allows the free turning of said pedals around their spin axes if the vehicle crashes and the structure of the vehicle whereupon the pedal is assembled is deformed, thereby protecting the driver from damage that the pedals could cause them by moving in their direction.

As an example, patent document DE19515852 discloses a system to disconnect a pedal of a mechanism, specifically a braking mechanism, wherein the actuator rod is made of at least two separable parts and/or assembled by means of a breakable joint provided with a breakage or separation point. To break or dismantle the actuator rod and disconnect the pedal from the braking mechanism, devices such as those described in documents EP1164128-B1 and US5921144 can be used.

Document EP1134128-B1 discloses a device according to the preamble of claim 1, wherein the actuator rod consists of a low ductility material, which has an area of greater weakness; a rotating component secured to, and mounted on, the pedal with the capacity to turn freely around a shaft and through which the actuator rod is joined to the pedal; and an activating arm that can act, during a head-on impact of sufficient magnitude, on the rotating component, thereby provoking a partial rotation and, in turn, applying a moment of flexion to the actuator rod that splits it in its area of greater weakness. The device disclosed in document EP1134128-B1 is highly complex, as lever and cam mechanisms are needed for its operation, which largely complicate its assembly and which determine the pedal and actuator rod configurations. Furthermore, this system is not adaptable to pedals whose connection to the actuator rod is different from the one disclosed, as occurs in most of the cases that use much more practical connections that facilitate their assembly, for example, by means of retaining bodies at the free end of the actuator rod, joinable in the body of the pedal according to the longitudinal direction of the rod and in the opposite direction to that of the pedal when it is actuated by the user.

Document US5921144 discloses a device whereby the pedal comprises an adapted extension to push a failure panel, in the form of cams, where the pedal tends to move towards the driver's feet as a consequence of an impact of the vehicle, so that said panel, upon being pressured by the extension of the pedal, cuts the actuator rod. This device also uses cam-type components that require a complex assembly. Furthermore, if the vehicle receives a sudden impact, this device moves towards the driver's feet before the pedal disconnects, with the danger that this implies.

In other cases similar to the one disclosed, in addition to disconnecting the pedal, thereby causing the breakage of the actuator rod, the devices comprise other supporting components aimed at pushing the pedal, moving it away from the driver's feet area at the moment the vehicle receives the impact. An example is disclosed in document JP2002087229.

There are also systems adapted to bend the actuator rod and therefore allow for the retraction of the pedal without breaking the actuator rod, as in for example those disclosed in document EP0879162-B1, wherein the actuator rod bends near its brake booster; or in document EP0904990, wherein the actuator rod bends at its centre. These systems, besides being complex, do not allow for the free, unopposed turning of the pedal when a collision occurs, as the actuator rod exerts a certain amount of opposition to the movement of the pedal.

### Description of the invention

With the aim of providing a solution to the problems raised, a device to disconnect the steering pedal from a vehicular mechanism in the case of a head-on collision of the vehicle is disclosed, applicable to pedals which, assembled with the capacity to turn around a main shaft, receive pressure in its front part from the foot and transfer its force to said mechanism; the device comprising an actuator rod articulately connected to the pedal which transmits, in normal operating conditions of the vehicle, the turning movement of the pedal to the mechanism. The device also comprises an impact receiving body, with the capacity to turn around the said main shaft, adapted to impact with a non-deformable component of the vehicle as a consequence of a collision.

Essentially, the device is **characterised in that** the impact receiving body is provided with an appendage located between the pedal and the actuator rod, facing the latter, and a support portion adapted to run into a non-deformable component of the vehicle when there is a head-on collision of the vehicle, obliging the impact receiving body to turn suddenly about the main shaft, in the same turning direction as the pedal when it receives the actuation from the foot, sufficient enough so that said appendage, in turn, collides against the actuator rod and breaks it, thereby producing the disconnection desired between the pedal and the mechanism.

The receiving body, which can be made of a single piece and is rotatively mounted on the main turning shaft of the pedal, greatly facilitates the assembly of the device, which is much simpler than those known in the state of the art.

According to another characteristic of the invention, the appendage of the impact receiving body is provided with an edge facing the actuator rod supplied with a notch of a similar contour to the outer part of said actuator rod, adapted to partially envelop the rod by leaning upon it in a head-on collision of the vehicle.

Another noteworthy aspect of the aim of the invention of the device is that the actuator rod is cross-sectionally hollow, to ease its breaking when the appendage collides suddenly against it.

According to another characteristic of the invention, the support portion and/or the pedal are configured so that, if the impact receiving body continues turning and after the appendage breaks the actuator rod, said support portion makes contact with the pedal, causing the turning of the pedal due to the push of said non-deformable component.

In a variant of the invention, the impact receiving body is provided with a thrust part, supportive of the impact receiving body, located on the front side of the pedal between the appendage and the support portion of said impact receiving body, adapted to push the pedal when the turning of the impact receiving body occurs, after the appendage breaks the actuator rod.

### Brief description of the drawings

In the attached drawings, by way of non-limitative examples, a preferred embodiment of the device to disconnect a pedal of a corresponding mechanism and according to the invention is illustrated. In said drawings:
Fig. 1 is a perspective view of the device according to the invention in normal operating conditions of the vehicle;
Fig. 2 is also a perspective view, but from a different angle, from that of Fig. 1;
Fig. 3 is a perspective view of the device according to the invention after a collision of the vehicle occurs;

### Detailed description of the drawings

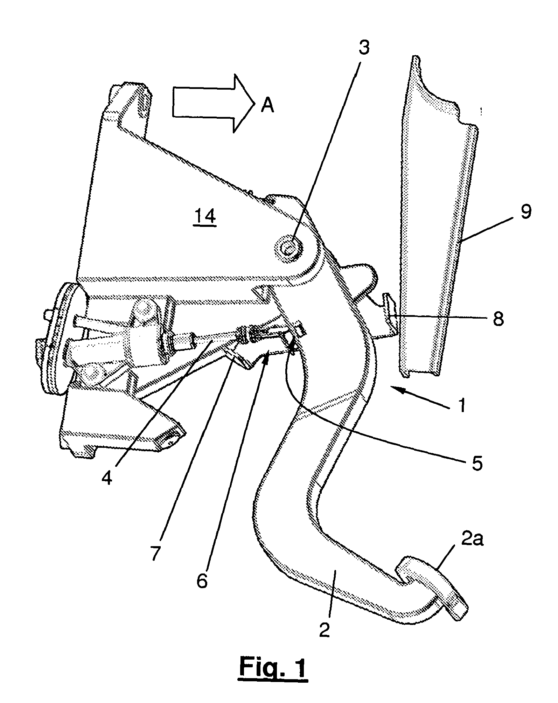

Fig. 1 shows a pedal 2 assembled with the capacity to turn around a main shaft 3, the pedal 2 being provided at its end with a flat platform 2a, designed to receive the actuation of a driver's foot. The pedal 2 is connected articulately by means of connection 5 with the top end of an actuator rod 4, which passes on the turning movement of the pedal 2 to a clutch mechanism, not shown; pedal and said clutch mechanism being connected in this way in normal operating conditions of the vehicle.

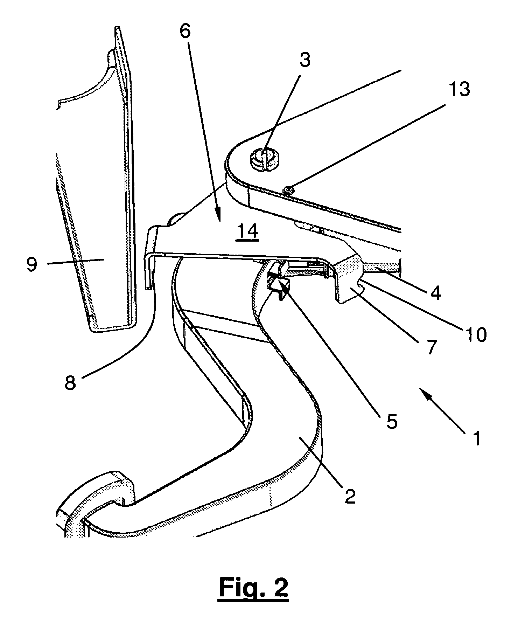

The device 1 of the invention comprises, as observed in Figs. 1 to 3, an impact receiving body 6 mounted with the capacity to turn around the main shaft 3 and adjacent to a lateral pedal 2. In the situation shown in Fig. 1, said impact receiving body 6 is joined to the support structure 14 of the main shaft 3 in a supportive manner through a fusible component 13 (see Fig. 2). In normal operating conditions of the vehicle, the pedal 2 can turn around the main shaft 3 without running into the impact receiving body 6, which is inoperative.

The impact receiving body 6 is made of a single body in the shape of a flat plate provided with two extensions folded in a straight angle and towards the pedal 2, setting a support portion 8 and an appendage 7, whose aim is explained below.

The support portion is intended to impact against a non-deformable component 9 of the vehicle's chassis when a collision occurs and is located on the front side of the pedal 2, between the pedal and the aforementioned non-deformable component. Regarding the appendage 7, it is located between the actuator rod 4 and the pedal 2 and is arranged in a way so that it comes in contact with the edge, with a certain incline, above said actuator rod 4.

As can be observed in Fig. 2, the attacking edge of appendage 7 facing the actuator rod 4 is provided with a notch 10 of a contour similar to that of the outer part of the actuator rod 4, adapted to partially envelop the actuator rod 4 by leaning upon in a collision of the vehicle.

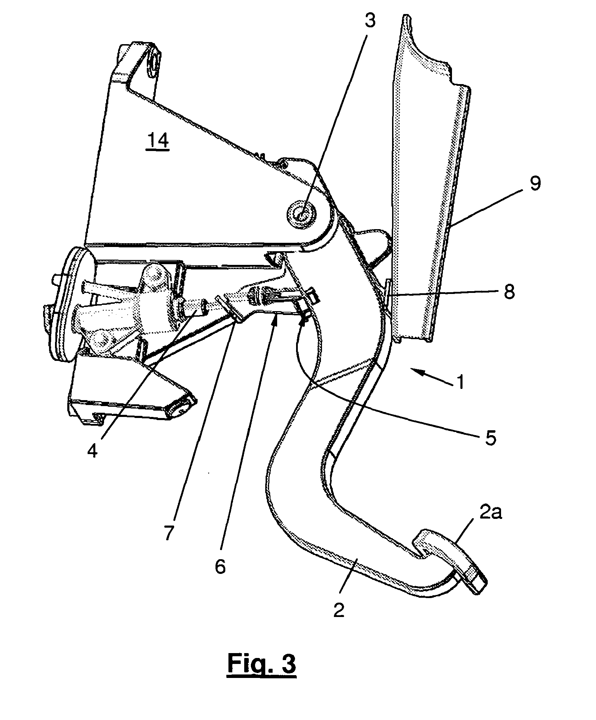

When a collision occurs, as shown in Fig. 3, the support structure 14 of the main shaft 3 of the pedal 2 moves in the direction indicated by arrow A of Fig. 1, as a consequence of a deformation of the vehicle's chassis. When this happens, the support portion 8 of the impact receiving body 8 runs into the non-deformable component 9 of the vehicle's chassis, breaking the fusible component 13, for example by shearing, and permitting the turning of the impact receiving body 6 in the same direction as that of the pedal 2 when it is actuated by a driver. When the impact receiving body 6 turns suddenly around the main shaft 3, the appendage 7 of said impact receiving body 6 is moved towards the actuator rod 4 and hits it. The notch 10 partially and momentarily envelops the actuator rod 4 and breaks it quickly and cleanly due to the pressure of the appendage 7.

As the deformation of the vehicle's chassis continues, the pedal 2 is obliged to turn around the main shaft 3, automatically withdrawing itself due to the push of the non-deformable component of the vehicle. The configuration of the support portion 8, which in-this situation remains arranged between the pedal 2 and the non-deformable component 9, just as that of the part of the pedal 2 that comes into contact with said support portion 8, can cause the moment from which the pedal 2 is obliged to turn around the main shaft 3 occur earlier.

In a variant of embodiment, the impact receiving body 6 is provided with a thrust part, as another extension of the flat plate that forms it, located on the front side of the pedal 2 between the appendage 7 and the support portion 8 of said impact receiving body, adapted to push the pedal 2 when the turning of the impact receiving body 6 occurs, but after the appendage 7 breaks the actuator rod 4.

## Claims

1. Device (1) to disconnect a steering pedal (2) from a vehicular mechanism in the case of a head-on collision, particularly applicable to pedals which, assembled with the capacity to turn around a main shaft (3), receive pressure from the foot in its front part and transfer its force to said mechanism; the device comprising an actuator rod (4) articulately connected to the pedal and which transmits, in normal operating conditions of the vehicle, the movement of the turning of the pedal to the mechanism; the device also comprising an impact receiving body (6), with the capacity to turn around the aforementioned main shaft, adapted to make impact with a non-deformable component (9) of the vehicle as a consequence of a collision, **characterised in that** the impact receiving body is provided with
- an appendage (7) located between the pedal and the actuator rod, facing the latter; and
- a support portion (8) adapted to run into a non-deformable component (9) of the vehicle when a head-on collision of the vehicle occurs, obliging the impact receiving body to turn suddenly about the main shaft, in the same turning direction as the pedal when it receives actuation from the foot, sufficient enough for said appendage, in turn, to sharply hit the actuator rod and break it, thereby producing the desired disconnection between the pedal and the mechanism.

2. Device (1) according to claim 1, **characterised in that** the appendage (7) of the impact receiving body (6) is provided with an edge facing the actuator rod (4) and a notch (10) of contour similar to that of the outer part of said actuator rod (4), adapted to partially envelop the rod by leaning on it at the moment of a head-on collision of the vehicle.

3. Device (1) according to either claim 1 or 2, **characterised in that** the actuator rod (4) is cross-sectionally hollow to facilitate its breakage when the appendage (7) collides sharply against it.

4. Device (1) according to any of the previous claims, **characterised in that** the support portion (8) and/or pedal (2) are configured so that, if the turning of the impact receiving body (6)continues and after the appendage (7) breaks the actuator rod (4), the aforementioned support portion (8) makes contact with the pedal (2), causing the turning of the pedal (2) due to the thrust of said non-deformable component.

5. Device (1) according to any of claims 1 to 3, **characterised in that** the impact receiving body (6) is also provided with a thrust part supportive of the impact receiving body, located on the front side of the pedal (2) between the appendage (7) and the support portion (8) of said impact receiving body, adapted to push the pedal when the turning of the impact receiving body occurs and after the appendage breaks the actuator rod (4).

## Patentansprüche

1. Vorrichtung (1) zum Entkoppeln eines Steuerpedals (2) von einem Fahrzeugmechanismus im Falle einer Frontalkollision, insbesondere anwendbar auf Pedale, die mit der Fähigkeit, sich um eine Hauptwelle (3) zu drehen, montiert sind, welche Druck vom Fuß an ihrem Vorderteil erhalten und diese Kraft auf den genannten Mechanismus übertragen; wobei die Vorrichtung eine Betätigungsstange (4) umfasst, die gelenkig mit dem Pedal verbunden ist und welche in normalen Betriebszuständen des Fahrzeugs die Bewegung der Drehung des Pedals auf den Mechanismus überträgt; wobei die Vorrichtung ebenfalls einen Aufprall aufnehmenden Körper (6) umfasst, der die Fähigkeit hat, sich um die zuvor genannte Hauptwelle zu drehen, der dazu angepasst ist, infolge einer Kollision auf eine unverformbare Komponente (9) des Fahrzeugs aufzuprallen, **dadurch gekennzeichnet, dass** der Aufprall aufnehmende Körper mit Folgendem versehen ist
- einem Fortsatz (7), der zwischen dem Pedal und der Betätigungsstange gelegen ist und auf Letztere gerichtet ist; und
- einen Stützteil (8), der dazu angepasst ist, auf eine unverformbare Komponente (9) des Fahrzeugs zu treffen, wenn es zu einer Frontalkollision des Fahrzeugs kommt, welcher den Aufprall aufnehmenden Körper dazu zwingt, sich plötzlich um die Hauptwelle zu drehen, in der selben Drehrichtung wie das Pedal, wenn es eine Betätigung durch den Fuß erfährt, was ausreicht, damit der genannte Fortsatz seinerseits scharf auf die Betätigungsstange stößt und diese zerbricht, wobei die gewünschte Entkopplung zwischen dem Pedal und dem Mechanismus herbeigeführt wird.

2. Vorrichtung (1) nach Anspruch 1, **dadurch gekennzeichnet, dass** der Fortsatz (7) des Aufprall aufnehmenden Körpers (6) mit einem auf die Betätigungsstange (4) gerichteten Rand und mit einer Aussparung (10) versehen ist, deren Umriss dem des äußeren Teils der genannten Betätigungsstange (4) ähnelt, die dazu angepasst ist, die Stange durch Anlehnen an dieselbe zum Zeitpunkt der Frontalkollision des Fahrzeugs teilweise zu umschließen.

3. Vorrichtung (1) nach Anspruch 1 oder 2, **dadurch gekennzeichnet, dass** die Betätigungsstange (4) einen hohlen Querschnitt hat, um ihr Brechen zu erleichtern, wenn der Fortsatz (7) scharf gegen dieselbe stößt.

4. Vorrichtung (1) nach einem der vorherigen Ansprüche, **dadurch gekennzeichnet, dass** der Stützteil (8) und/oder das Pedal (2) derart ausgebildet sind, dass wenn die Drehung des Aufprall aufnehmenden Körpers (6) andauert und nachdem der Fortsatz (7) die Betätigungsstange (4) zerbricht, der vorgenannte Stützteil (8) das Pedal (2) berührt, wodurch die Drehung des Pedals (2) aufgrund des Schubs der genannten unverformbaren Komponente herbeigeführt wird,

5. Vorrichtung (1) nach einem der Ansprüche 1 bis 3, **dadurch gekennzeichnet, dass** der Aufprall aufnehmende Körper (6) ebenfalls mit einem Schubteil versehen ist, der den Aufprall aufnehmenden Körper (6) stützt, der auf der Vorderseite des Pedals (2) zwischen dem Fortsatz (7) und dem Stützteil (8) des genannten Aufprall aufnehmenden Körpers (6) gelegen ist, der dazu angepasst ist, das Pedal zu schieben, wenn es zur Drehung des Aufprall aufnehmenden Körpers kommt und nachdem der Fortsatz die Betätigungsstange (4) zerbricht.

## Revendications

1. Dispositif (1) pour déconnecter une pédale de direction (2) d'un mécanisme de conduite dans le cas d'une collision frontale, particulièrement applicable à des pédales qui, assemblées avec la capacité de tourner autour d'un axe principal (3) reçoivent la pression du pied sur sa partie avant et transfèrent sa force audit mécanisme; le dispositif comprenant une tige d'actionneur (4) relié de manière articulée à la pédale et qui transmet, dans des conditions normales de fonctionnement du véhicule, le mouvement de rotation de la pédale au mécanisme; el dispositif comprenant également un corps de réception d'impact (6), avec la capacité de tourner autour dudit arbre principal, adapté pour faire impact contre une composante non-déformable (9) du véhicule comme conséquence d'une collision, **caractérisé en ce que** le corps de réception d'impact est pourvu de:
- un appendice (7) située entre la pédale et la tige d'actionneur, en face de celle-ci; et
- une portion de support (8) adaptée pour atteindre un composant non-déformable (9) du véhicule lorsque a lieu une collision frontale du véhicule, en obligeant le corps de réception d'impact à tourner subitement autour de l'axe principal, dans la même direction de rotation que la pédale lorsqu'elle reçoit l'action du pied, suffisante pour que ledit appendice, à son tour, frappe brusquement la tige d'actionneur et la casse, en produisant de la sorte la déconnexion souhaitée entre la pédale et le mécanisme.

2. Dispositif (1) selon la revendication 1, **caractérisé en ce que** l'appendice (7) du corps de réception d'impact (6) est pourvu d'un bord en regard de la tige d'actionneur (4) et une entaille (10) de contour similaire à celui de la partie extérieure de ladite tige d'actionneur (4), adaptée pour envelopper partiellement la tige en s'appuyant sur celle-ci au moment d'une collision frontale du véhicule.

3. Dispositif (1) selon l'une quelconque des revendications 1 ou 2, **caractérisé en ce que** la tige d'actionneur (4) est de section transversale creuse pour faciliter sa rupture lorsque l'appendice (7) frappe brusquement contre celle-ci.

4. Dispositif (1) selon l'une quelconque des revendications précédentes, **caractérisé en ce que** la portion de support (8) et/ou la pédale (2) sont configurées de telle manière que, si la rotation du corps de réception d'impact (6) continue et après que l'appendice (7) aura cassé la tige d'actionneur (4), ladite portion de support (8) entre en contact avec la pédale (2), en produisant la rotation de la pédale (2) du fait de la poussée de ladite composante non-déformable.

5. Dispositif (1) selon l'une quelconque des revendications 1 à 3, **caractérisé en ce que** le corps de réception d'impact (6) est également pourvu d'une partie de poussée soutenant le corps de réception d'impact, située sur le côté avant de la pédale (2) entre l'appendice (7) et la portion de support (8) dudit corps de réception d'impact, adaptée pour pousser la pédale lorsque a lieu la rotation du corps de réception d'impact et après que l'appendice aura cassé la tige d'actionneur (4).
